# EUROPEAN PATENT APPLICATION

(11) **EP 1 376 830 A2**
(43) Date of publication of application: **02.01.2004**
(21) Application number: 03013717.8
(22) Date of filing: 17.06.2003
(51) Int. Cl.: H02K 15/12, H02K 3/30

(54) **Method for manufacturing a coil winding assembly of a concentrated winding motor**

(30) Priority: 21.06.2002 JP 2002180968
(71) Applicant: Harmonic Drive Systems Inc., Shinagawa-ku, Tokyo 140-0013 (JP)
(72) Inventor: Kobayashi, Kiyoto, c/o Harmonic Drive Systems Inc., Minamiazumi-gun, Nagano-ken 399-8305 (JP)
(74) Representative: Klunker . Schmitt-Nilson . Hirsch

(57) **Abstract**

In a method for manufacturing a winding assembly of a concentrated winding motor, bobbinless coil assemblies 1 are produced in a manner that their shapes are nearly identical to winding slots 4 in a stator core 3 of a motor. The bobbinless coil windings 1 are insulated on their surfaces by coating with an insulating film 2. The bobbinless coil windings 1, whose surfaces have been insulated, are inserted into the winding slots 4 in the stator core 3 of the concentrated winding motor and bonded in place. The method allows coil windings to be mounted in the winding slots without using a bobbin or insulator, and allows their surfaces to be insulated with little need for space.

## Description

### BACKGROUND 0F THE INVENTION

### Field of the Invention

The present invention relates to a method for manufacturing a winding assembly of a concentrated winding motor. More particularly, it relates to a method for manufacturing a winding assembly of a concentrated winding motor in which a wide winding area can be obtained without increasing coil-winding space in the winding assembly.

### Description of the Related Art

Conventionally, a winding assembly of a concentrated winding motor is typically constituted so that it has a plurality of insulating resin bobbins and coils wound around the bobbins, or it has a core, resin-molded insulators covering the core and coils wound around the insulators.

Since the conventional winding assembly must be provided with the bobbins or insulators around which coils are wound, its winding area (slot factor) for the coils is reduced by that amount occupied by the bobbins or insulators. A sufficient winding area may be obtained by making the bobbins or insulators as thin as possible, but it is difficult to produce thin bobbins or insulators by mold forming. Also, reducing the thickness of these parts will inevitably reduce their mechanical strength as well. The fact of the matter is that the winding area for coils is sacrificed to secure required thickness of bobbins and insulators. However, with a small winding area, it is not possible to implement a high-performance motor.

Thus, a main object of the present invention is to provide a method for manufacturing a winding assembly of a concentrated winding motor, which is capable of obtaining a wide winding area.

### SUMMARY 0F THE INVENTION

To achieve the above and other objects, a method for manufacturing a winding assembly of a concentrated winding motor according to the present invention comprises the steps of:
producing concentrated, well-aligned winding type air-core coils nearly identical in shape to winding slots in a rotor core or stator core of the motor;
applying an insulating process to surfaces of the air-core coils, the insulating process being either coating an insulating thin film on the surfaces of the air-core coils or mold-forming an insulating thin film on the surfaces thereof; and
inserting the air-core coils whose surfaces have been insulated into the winding slots, whereby the winding assembly constituted by the air-core coils is assembled in the rotor or stator core.

According to the method of the present invention, the coil windings (insulated air-core coils) can be assembled in the winding slots without using a bobbin or resin-formed insulator, and surface insulation of the coil windings can be formed with little need for space. Thus, the method according to the present invention can increase the winding area of the winding assembly accommodated in the stator or rotor core compared to the conventional methods, whereby it is possible to produce a high-performance, concentrated winding motor.

### BRIEF DESCRIPTION 0F THE DRAWINGS

FIG. 1 is a perspective view showing an example of a bobbinless coil winding to be assembled in a concentrated winding motor according to the present invention; and

FIG. 2 is a partially cut-away plan view of a stator showing a state in which the bobbinless coil windings of FIG. 1 whose surfaces have been insulated are assembled in winding slots of the stator of the concentrated winding motor.

### DETAILED DESCRIPTION OF THE PREFERRED EMBODIMENTS

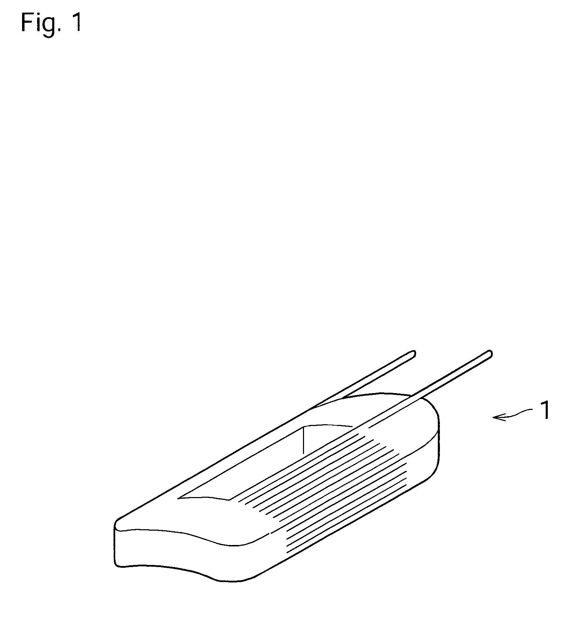

With respect to the attached drawings, there will be described an example of a method for manufacturing a winding assembly of a concentrated winding motor according to the present invention. In the method of the manufacturing a winding assembly of a concentrated winding motor according to this example, a plurality of bobbinless coil windings (concentrated, well-aligned winding type air-core coils) 1 are produced so that the shape thereof is nearly identical to each of winding slots in a stator core of a motor as shown in FIG. 1.

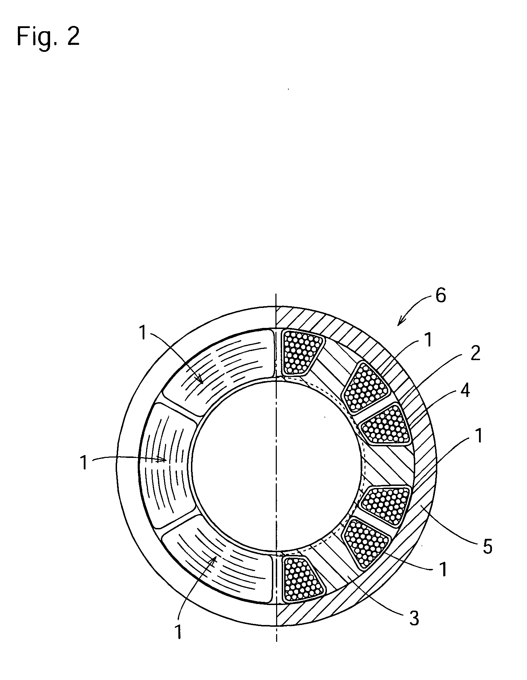

Then, the bobbinless coil windings 1 are subject to insulating process, in which the surfaces thereof are coated with an insulating thin film 2(see FIG. 2). Alternatively, an insulating thin film may be mold-formed so as to cover the surfaces of the bobbinless coil windings 1.

Then, as shown in FIG. 2, the bobbinless coil windings 1 whose surfaces have been covered with the insulating film 2 are inserted into the respective winding slots 4 in the stator core 3 of the concentrated winding motor and bonded to fix in place. Whereby, such a condition is obtained in that the winding assembly constituted by the bobbinless coil windings is assembled in the stator core 3. Then, the stator core 3 is assembled in a yoke core 5 to obtain a stator 6.

The method according to the present invention allows the coil winding to be mounted in the winding slots without using a bobbin or resin-formed insulator, and allows their surfaces to be insulated with little need for space. Thus, the method according to the present invention can increase the winding area in winding slots compared to conventional methods, making it possible to produce high-performance, concentrated winding motors.

## Claims

1. A method for manufacturing a winding assembly of a concentrated winding motor comprises the steps of:
producing concentrated, well-aligned winding type air-core coils nearly identical in shape to winding slots in a rotor core or stator core of the motor;
applying an insulating process to surfaces of the air-core coils, the insulating process being either coating an insulating thin film on the surfaces of the air-core coils or mold-forming an insulating thin film on the surfaces thereof; and
inserting the air-core coils whose surfaces have been insulated into the winding slots, whereby the winding assembly constituted by the air-core coils is assembled in the rotor or stator core.

2. A winding assembly of a concentrated winding motor produced by the method according to claim 1.

3. A concentrated winding motor comprising the winding assembly according to claim 2.
